(19) Europäisches Patentamt
European Patent Office
Office européen des brevets

(11) **EP 2 677 679 B1**

(12) **EUROPEAN PATENT SPECIFICATION**

(45) Date of publication and mention
of the grant of the patent:
**11.12.2019 Bulletin 2019/50**

(21) Application number: **11858829.2**

(22) Date of filing: **29.12.2011**

(51) Int Cl.:
*H04B 7/0456* (2017.01)    *H04B 7/06* (2006.01)
*H04B 7/0452* (2017.01)

(86) International application number:
**PCT/CN2011/084878**

(87) International publication number:
**WO 2012/109945 (23.08.2012 Gazette 2012/34)**

(54) **METHOD AND SYSTEM FOR PRECODING OPEN LOOP SPATIAL MULTIPLEXING AND PRECODING INDICATION METHOD**

VERFAHREN UND SYSTEM ZUR VORCODIERUNG VON RÄUMLICHEM OPEN-LOOP-MULTIPLEXING UND VORKODIERUNGSANZEIGEVERFAHREN

PROCÉDÉ ET SYSTÈME DE PRÉCODAGE DANS LE CAS D'UN MULTIPLEXAGE DANS UN ESPACE EN BOUCLE OUVERTE, ET PROCÉDÉ D'INDICATION DE PRÉCODAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.02.2011 CN 201110037435**

(43) Date of publication of application:
**25.12.2013 Bulletin 2013/52**

(73) Proprietor: **ZTE Corporation**
**Shenzhen, Guangdong 518057 (CN)**

(72) Inventors:
• **CHEN, Yijian**
**Shenzhen City**
**Guangdong Province 518057 (CN)**
• **LI, Yu Ngok**
**Shenzhen City**
**Guangdong Province 518057 (CN)**
• **SUN, Yunfeng**
**Shenzhen City**
**Guangdong Province 518057 (CN)**
• **ZHANG, Junfeng**
**Shenzhen City**
**Guangdong Province 518057 (CN)**
• **GUO, Senbao**
**Shenzhen City**
**Guangdong Province 518057 (CN)**

(74) Representative: **Gevers Patents**
**Intellectual Property House**
**Holidaystraat 5**
**1831 Diegem (BE)**

(56) References cited:
**WO-A1-2009/113766    WO-A1-2010/145554**
**CN-A- 101 594 208    CN-A- 101 800 628**
**CN-A- 101 826 951    CN-A- 101 938 336**
**CN-A- 102 098 143**

• 3GPP: "3rd Generation Partnership Project; Technical Specification Group Radio Access Network; Evolved Universal Terrestrial Radio Access (E-UTRA); Physical layer procedures (Release 8)", 3GPP DRAFT; DRAFT36213-850, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 16 December 2008 (2008-12-16), XP050316253,
• 3GPP: "3rd Generation Partnership Project;Technical Specification Group Radio Access Network;Evolved Universal Terrestrial Radio Access (E-UTRA);Physical Channels and Modulation(Release 8)", 3GPP DRAFT; DRAFT36211-850, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 16 December 2008 (2008-12-16), XP050316251,

**Description**

Technical Field

The present document relates to the field of the mobile communication technology, and in particular, to a precoding method and system for open loop spatial multiplexing and a precoding indication method.

Background of the Related Art

In the wireless communication system, a spatial multiplexing mode is adopted between a sending end and a receiving end and multiple antennas are used to obtain higher transmission rate. The common spatial multiplexing technology based on the closed loop feedback can be described as that: the receiving end feeds back the channel state information (abbreviated as CSI) to the sending end, the sending end uses some transmission precoding technologies according to the acquired channel information, and thus the transmission performance is greatly improved.

However, in the real application, the closed loop spatial multiplexing technology is not applicable sometimes; for example, the link quality of the uplink feedback is poor and the channel information can not be fed back accurately. Again for example, the movement speed of the terminal is very fast, so the channel between the base station and the terminal changes very fast (the movement leads to the Doppler frequency shift, and brings the changes on the time domain); the time delay brought by the feedback link and the schedule, etc., makes the fed back CSI information of the previous channel be unable to represent the real-time channel information very well, which causes mismatching of the precoding. In this case, the open loop spatial multiplexing can support the space multiplexing well in the case of not obtaining the channel state information.

The current open loop spatial multiplexing technology only supports the situation of a single user, for example, in the long term evolution (abbreviated as LTE), the specified open loop precoding technology is:

$$\begin{vmatrix} y^{(0)}(i) \\ \vdots \\ y^{(P-1)}(i) \end{vmatrix} = W(i)D(i)U \begin{vmatrix} x^{(0)}(i) \\ \vdots \\ x^{(v-1)}(i) \end{vmatrix}$$

Wherein, $\begin{bmatrix} x^{(0)}(i) \\ \vdots \\ x^{(v-1)}(i) \end{bmatrix}$ is a symbol to be sent, $v$ is the number of layers of the transmission data, $U$ matrix is a matrix related to the number of layers $v$, $D(i)$ is a matrix related to a frequency location i and the number of layers $v$. $U$ and $D(i)$ are shown in the following table:

Table 1

| The number of layers $v$ | $U$ | $D(i)$ |
|---|---|---|
| 2 | $\dfrac{1}{\sqrt{2}}\begin{bmatrix} 1 & 1 \\ 1 & e^{-j2\pi/2} \end{bmatrix}$ | $\begin{bmatrix} 1 & 0 \\ 0 & e^{-j2\pi i/2} \end{bmatrix}$ |
| 3 | $\dfrac{1}{\sqrt{3}}\begin{bmatrix} 1 & 1 & 1 \\ 1 & e^{-j2\pi/3} & e^{-j4\pi/3} \\ 1 & e^{-j4\pi/3} & e^{-j8\pi/3} \end{bmatrix}$ | $\begin{bmatrix} 1 & 0 & 0 \\ 0 & e^{-j2\pi i/3} & 0 \\ 0 & 0 & e^{-j4\pi i/3} \end{bmatrix}$ |
| 4 | $\dfrac{1}{2}\begin{bmatrix} 1 & 1 & 1 & 1 \\ 1 & e^{-j2\pi/4} & e^{-j4\pi/4} & e^{-j6\pi/4} \\ 1 & e^{-j4\pi/4} & e^{-j8\pi/4} & e^{-j12\pi/4} \\ 1 & e^{-j6\pi/4} & e^{-j12\pi/4} & e^{-j18\pi/4} \end{bmatrix}$ | $\begin{bmatrix} 1 & 0 & 0 & 0 \\ 0 & e^{-j2\pi i/4} & 0 & 0 \\ 0 & 0 & e^{-j4\pi i/4} & 0 \\ 0 & 0 & 0 & e^{-j6\pi i/4} \end{bmatrix}$ |

$W(i)$ is a matrix related to the frequency location i and the number of layers $v$. When the number of transmission antennas is 2, $W(i)$ is a fixed $2 \times 2$ unit matrix; when the number of transmission antennas is 4, the value of the $W(i)$ can be $C_1, C_2, C_3, C_4$, and the specific value is related to the value of i; the $C_1, C_2, C_3, C_4$ are the code words of which the indexes corresponding to the $\upsilon$ layers are 12, 13, 14 and 15 in the 4 antennas codebook (table 2).

Table 2

| Index | $u_n$ | The number of layers $\upsilon$ | | | |
|---|---|---|---|---|---|
| | | 1 | 2 | 3 | 4 |
| 0 | $u_0 = [1\ \text{-}1\ \text{-}1\ \text{-}1]^T$ | $W_0^{\{1\}}$ | $W_0^{\{14\}}/\sqrt{2}$ | $W_0^{\{124\}}/\sqrt{3}$ | $W_0^{\{1234\}}/2$ |
| 1 | $u_1 = [1\ \text{-}j\ 1\ j]^T$ | $W_1^{\{1\}}$ | $W_1^{\{12\}}/\sqrt{2}$ | $W_1^{\{123\}}/\sqrt{3}$ | $W_1^{\{1234\}}/2$ |
| 2 | $u_2 = [1\ 1\ \text{-}1\ 1]^T$ | $W_2^{\{1\}}$ | $W_2^{\{12\}}/\sqrt{2}$ | $W_2^{\{123\}}/\sqrt{3}$ | $W_2^{\{3214\}}/2$ |
| 3 | $u_3 = [1\ j\ 1\ \text{-}j]^T$ | $W_3^{\{1\}}$ | $W_3^{\{12\}}/\sqrt{2}$ | $W_3^{\{123\}}/\sqrt{3}$ | $W_3^{\{3214\}}/2$ |
| 4 | $u_4 = \begin{bmatrix} 1 & (-1-j)/\sqrt{2} & -j & (1-j)/\sqrt{2} \end{bmatrix}^T$ | $W_4^{\{1\}}$ | $W_4^{\{14\}}/\sqrt{2}$ | $W_4^{\{124\}}/\sqrt{3}$ | $W_4^{\{1234\}}/2$ |
| 5 | $u_5 = \begin{bmatrix} 1 & (1-j)/\sqrt{2} & j & (-1-j)/\sqrt{2} \end{bmatrix}^T$ | $W_5^{\{1\}}$ | $W_5^{\{14\}}/\sqrt{2}$ | $W_5^{\{124\}}/\sqrt{3}$ | $W_5^{\{1234\}}/2$ |
| 6 | $u_6 = \begin{bmatrix} 1 & (1+j)/\sqrt{2} & -j & (-1+j)/\sqrt{2} \end{bmatrix}^T$ | $W_6^{\{1\}}$ | $W_6^{\{13\}}/\sqrt{2}$ | $W_6^{\{134\}}/\sqrt{3}$ | $W_6^{\{1324\}}/2$ |
| 7 | $u_7 = \begin{bmatrix} 1 & (-1+j)/\sqrt{2} & j & (1+j)/\sqrt{2} \end{bmatrix}^T$ | $W_7^{\{1\}}$ | $W_7^{\{13\}}/\sqrt{2}$ | $W_7^{\{134\}}/\sqrt{3}$ | $W_7^{\{1324\}}/2$ |
| 8 | $u_8 = [1\ \text{-}1\ 1\ 1]^T$ | $W_8^{\{1\}}$ | $W_8^{\{12\}}/\sqrt{2}$ | $W_8^{\{124\}}/\sqrt{3}$ | $W_8^{\{1234\}}/2$ |
| 9 | $u_9 = [1\ \text{-}j\ \text{-}1\ \text{-}j]^T$ | $W_9^{\{1\}}$ | $W_9^{\{14\}}/\sqrt{2}$ | $W_9^{\{134\}}/\sqrt{3}$ | $W_9^{\{1234\}}/2$ |
| 10 | $u_{10} = [1\ 1\ 1\ \text{-}1]^T$ | $W_{10}^{\{1\}}$ | $W_{10}^{\{13\}}/\sqrt{2}$ | $W_{10}^{\{123\}}/\sqrt{3}$ | $W_{10}^{\{1324\}}/2$ |
| 11 | $u_{11} = [1\ j\ \text{-}1\ j]^T$ | $W_{11}^{\{1\}}$ | $W_{11}^{\{13\}}/\sqrt{2}$ | $W_{11}^{\{134\}}/\sqrt{3}$ | $W_{11}^{\{1324\}}/2$ |
| 12 | $u_{12} = [1\ \text{-}1\ \text{-}1\ 1]^T$ | $W_{12}^{\{1\}}$ | $W_{12}^{\{12\}}/\sqrt{2}$ | $W_{12}^{\{123\}}/\sqrt{3}$ | $W_{12}^{\{1234\}}/2$ |
| 13 | $u_{13} = [1\ \text{-}1\ 1\ \text{-}1]^T$ | $W_{13}^{\{1\}}$ | $W_{13}^{\{13\}}/\sqrt{2}$ | $W_{13}^{\{123\}}/\sqrt{3}$ | $W_{13}^{\{1324\}}/2$ |
| 14 | $u_{14} = [1\ 1\ \text{-}1\ \text{-}1]^T$ | $W_{14}^{\{1\}}$ | $W_{14}^{\{13\}}/\sqrt{2}$ | $W_{14}^{\{123\}}/\sqrt{3}$ | $W_{14}^{\{3214\}}/2$ |
| 15 | $u_{15} = [1\ 1\ 1\ 1]^T$ | $W_{15}^{\{1\}}$ | $W_{15}^{\{12\}}/\sqrt{2}$ | $W_{15}^{\{123\}}/\sqrt{3}$ | $W_{15}^{\{1234\}}/2$ |

Wherein, $W_n = I - 2u_n u_n^H / u_n^H u_n$, I is a unit matrix, $W_k^{(j)}$ represents the j$^{th}$ column vector of the matrix $W_k$. $W_k^{(j_1, j_2, \ldots j_n)}$ represents a matrix composed by the $j_1^{th}, j_2^{th}, \ldots j_n^{th}$ columns of the matrix $W_k$.

The most features of the independent claims are known from documents XP050316253 "3rd Generation Partnership Project; Technical Specification Group Radio Access Network; Evolved Universal Terrestrial Radio Access (E-UTRA); Physical layer procedures (Release 8)" of 3GPP, and document XP050316251 "3rd Generation Partnership Project; Technical Specification Group Radio Access Network; Evolved Universal Terrestrial Radio Access (E-UTRA);Physical Channels and Modulation(Release 8)" of 3GPP. Related technologies are also known from WO 2010/145554 A1.

## Summary of the Invention

There are the following problems existed in the above-mentioned scheme: not supporting the open loop multi-user spatial multiplexing.

Because of the expansion of the antenna technology, in the 8 transmission antennas application, there is a lack of the corresponding solution.

The main scenario considered when designing the scheme is a channel in a single polarized antenna scenario, and the channel in the dual polarized antenna scenario is not considered.

The technical problem to be solved by the present document is to provide a precoding method and system for open loop spatial multiplexing as defined in the independent claims, to implement effective precoding in the case of the open loop spatial multiplexing.

In order to solve the above-mentioned technical problem a precoding method for open loop spatial multiplexing is provided, including: in transmission resources, a base station precoding N-layer data to be sent by using

$$w_a = \begin{bmatrix} u_a \\ \alpha \cdot u_a \end{bmatrix},$$

wherein $u_a$ is a vector or matrix related to a transmission resource location i; $\alpha$ is a real number or a complex number related to the transmission resource location i; and N is an integer less than or equal to the number of base station transmission antennas.

Preferably, the above-mentioned method further can have the following characteristics:

the $u_a$ contains N columns, the $n^{th}$ column is $V_a^n$, and $V_a^n$ is related with i.

Preferably, the above-mentioned method further can have the following characteristics:

$$V_a^n = [1 \quad e^{j2\pi X/32} \quad e^{j4\pi X/32} \quad e^{j6\pi X/32}]^T,$$

wherein, X is an integer, and values of the X are different for different ns.

The above-mentioned method further has the following characteristics:

$\alpha$ is a scalar in a following set $\{1, j, -1, -j\}$.

The above-mentioned method further has the following characteristics:

$\alpha = g(i)$;

$$g(i) = \begin{cases} 1, & \mathrm{mod}(\left\lfloor \dfrac{i}{q} \right\rfloor, 4) = p1 \\[2ex] j, & \mathrm{mod}(\left\lfloor \dfrac{i}{q} \right\rfloor, 4) = p2 \\[2ex] -1, & \mathrm{mod}(\left\lfloor \dfrac{i}{q} \right\rfloor, 4) = p3 \\[2ex] -j, & \mathrm{mod}(\left\lfloor \dfrac{i}{q} \right\rfloor, 4) = p4 \end{cases};$$

wherein, q is an integer, values of p1, p2, p3 and p4 are one of 1, 2, 3 and 4, and are different from each other; or,

$$g(i) = \begin{cases} 1, & \mod\left(\left\lfloor \dfrac{i}{q} \right\rfloor, 2\right) = p1 \\[3mm] -1, & \mod\left(\left\lfloor \dfrac{i}{q} \right\rfloor, 2\right) = p3 \end{cases}$$

wherein, q is an integer, values of p1 and p3 are one of 1 and 2, and are different from each other.

Preferably, the above-mentioned method further can have the following characteristics:

in the transmission resources, the base station precodes M-layer data to be sent besides the N-layer data by using

$$w_b = \begin{bmatrix} u_b \\ \beta\, u_b \end{bmatrix}$$

, wherein $u_b$ is a vector or matrix related to the transmission resource location i; $\beta$ is a real number or a complex number related to the transmission resource location i; $\beta = -\alpha$ for same transmission resource locations; and N is an integer less than or equal to the number of base station transmission antennas.

Preferably, the above-mentioned method further can have the following characteristics:

the $u_b$ contains M columns, the $n^{th}$ column is $V_b^n$, and $V_b^n$ is related with i.

Preferably, the above-mentioned method further can have the following characteristics:

$$V_b^n = [1 \quad e^{j2\pi X/32} \quad e^{j4\pi X/32} \quad e^{j6\pi X/32}]^T,$$

wherein, X is an integer, and values of the X are different for different ns.

Preferably, the above-mentioned method further can have the following characteristics:

when the N-layer data and the M-layer data belong to the same user, the $u_a$ and the $u_b$ are same or different; when a sum of the M and the N is greater than 2 and the $u_a$ and the $u_b$ are different, the columns contained in the $u_a$ are a subset of the columns contained in the $u_b$, or the columns contained in the $u_b$ are a subset of the columns contained in the $u_a$.

Preferably, the above-mentioned method further can have the following characteristics:

when the N-layer data and the M-layer data belong to different users, the $u_a$ and the $u_b$ are different.

Preferably, the above-mentioned method further can have the following characteristics:

the $u_a$ and the $u_b$ are orthogonal.

A precoding system for open loop spatial multiplexing is also provided, including a base station device; wherein, the base station device is configured to: in transmission resources, precode N-layer data to be sent by using

$$w_a = \begin{bmatrix} u_a \\ \alpha \cdot u_a \end{bmatrix},$$

wherein, $u_a$ is a vector or matrix related to a transmission resource location i; $\alpha$ is a real number or a complex number related to the transmission resource location i; and N is an integer less than or equal to the number of base station transmission antennas.

Preferably, the above-mentioned system further can have the following characteristics:

the $u_a$ contains N columns, the $n^{th}$ column is $V_a^n$, and $V_a^n$ is related with i; and

$$V_a^n = [1 \quad e^{j2\pi X/32} \quad e^{j4\pi X/32} \quad e^{j6\pi X/32}]^T,$$ wherein, X is an integer, and values of the X are different for different ns.

The above-mentioned system further has the following characteristics:

$\alpha$ is a scalar in a following set $\{1, j, -1, -j\}$.

Preferably, the above-mentioned system further can have the following characteristics:

the base station device is further configured to: in the transmission resources, precode M-layer data to be sent besides

$$w_b = \begin{bmatrix} u_b \\ \beta \cdot u_b \end{bmatrix},$$

the N-layer data by using wherein $u_b$ is a vector or matrix related to the transmission resource location i; $\beta$ is a real number or a complex number related to the transmission resource location i; $\beta = -\alpha$ for same transmission resource locations; and N is an integer less than or equal to the number of base station transmission antennas.

Preferably, the above-mentioned system further can have the following characteristics:

the $u_b$ contains M columns, the $n^{th}$ column is $V_b^n$, and $V_b^n$ is related with i.

Preferably, the above-mentioned system further can have the following characteristics:

when the N-layer data and the M-layer data belong to the same user, the $u_a$ and the $u_b$ are same or different; when a sum of the M and the N is greater than 2 and the $u_a$ and the $u_b$ are different, the columns contained in the $u_a$ are a subset of the columns contained in the $u_b$, or the columns contained in the $u_b$ are a subset of the columns contained in the $u_a$; and

when the N-layer data and the M-layer data belong to different users, the $u_a$ and the $u_b$ are orthogonal.

A precoding indication method for open loop spatial multiplexing is also provided, including: a base station determining precoding modes of data of all layers to be sent, and notifying terminals corresponding to data of all layers of the precoding modes corresponding to the data of all layers.

Preferably, the above-mentioned system further can have the following characteristics:

the precoding mode refers to the number of precoding operations performed on the data to be sent and the number of the data layers processed in every precoding operation.

Preferably, the above-mentioned system further can have the following characteristics:

the terminals calculate and report channel quality indications according to acquired precoding modes of the data of all layers.

The embodiment of the present document can implement effective precoding in the case of open loop spatial multiplexing, and also can support multiple antennas (such as 8 transmission antennas) application.

Preferred Embodiments of the Invention

The precoding system for open loop spatial multiplexing of the present document includes a base station device and a terminal.

The base station device is used to: in transmission resources, precode N-layer data to be sent by using

$$w_a = \begin{bmatrix} u_a \\ \alpha \, u_a \end{bmatrix},$$

wherein, $u_a$ is a vector or matrix related to a transmission resource location i; $\alpha$ is a real number or a complex number related to the transmission resource location i; and N is an integer less than or equal to the number of base station transmission antennas.

The $u_a$ contains N columns, the $n^{th}$ column is $V_a^n$, and $V_a^n$ is related with i.

$$V_a^n = [1 \quad e^{j2\pi X/32} \quad e^{j4\pi X/32} \quad e^{j6\pi X/32}]^T,$$

wherein, X is an integer, and values of the X are different for different ns.
$\alpha$ is a scalar in a following set $\{1, j, -1, -j\}$.
$\alpha = g(i)$;

$$g(i) = \begin{cases} 1, & \mathrm{mod}(\left\lfloor \dfrac{i}{q} \right\rfloor, 4) = p1 \\[2mm] j, & \mathrm{mod}(\left\lfloor \dfrac{i}{q} \right\rfloor, 4) = p2 \\[2mm] -1, & \mathrm{mod}(\left\lfloor \dfrac{i}{q} \right\rfloor, 4) = p3 \\[2mm] -j, & \mathrm{mod}(\left\lfloor \dfrac{i}{q} \right\rfloor, 4) = p4 \end{cases};$$

wherein, q is an integer, values of p1, p2, p3 and p4 are one of 1, 2, 3 and 4, and are different from each other; or,

$$g(i) = \begin{cases} 1, & \mathrm{mod}(\left\lfloor \dfrac{i}{q} \right\rfloor, 2) = p1 \\[2mm] -1, & \mathrm{mod}(\left\lfloor \dfrac{i}{q} \right\rfloor, 2) = p3 \end{cases}$$

wherein, q is an integer, values of p1 and p3 are one of 1 and 2, and are different from each other.

The base station device is further used to: in the transmission resources, precode M-layer data to be sent

$$w_b = \begin{bmatrix} u_b \\ \beta \, u_b \end{bmatrix}$$

besides the N-layer data by using , wherein $u_b$ is a vector or matrix related to the transmission resource location i; $\beta$ is a real number or a complex number related to the transmission resource location i; $\beta = -\alpha$ for same transmission resource locations; and N is an integer less than or equal to the number of base station transmission antennas.

The $u_b$ contains M columns, the n$^{th}$ column is $V_b^n$, and the $V_b^n$ is related with i.

When the N-layer data and the M-layer data belong to a same user, the $u_a$ and the $u_b$ are same or different; when a sum of the M and the N is greater than 2 and the $u_a$ and the $u_b$ are different, the columns contained in the $u_a$ are a subset of the columns contained in the $u_b$, or the columns contained in the $u_b$ are a subset of the columns contained in the $u_a$; and when the N-layer data and the M-layer data belong to different users, the $u_a$ and the $u_b$ are orthogonal.

In the present document, the precoding method for open loop spatial multiplexing includes: in transmission

$$w_a = \begin{bmatrix} u_a \\ \alpha \, u_a \end{bmatrix},$$

resources, a base station precoding N-layer data to be sent by using wherein $u_a$ is a vector or matrix related to a transmission resource location i; $\alpha$ is a real number or a complex number related to the transmission resource location i; and N is an integer less than or equal to the number of base station transmission antennas.

Wherein, the $u_a$ contains N columns, the n$^{th}$ column is $V_a^n$, and $V_a^n$ is related with i.

$$V_a^n = [1 \quad e^{j2\pi X/32} \quad e^{j4\pi X/32} \quad e^{j6\pi X/32}]^T,$$

wherein, X is an integer, and values of the X are different for different ns.
$\alpha$ is a scalar in a following set $\{1, j, -1, -j\}$.
Specifically, $\alpha = g(i)$;

$$g(i) = \begin{cases} 1, & \mathrm{mod}(\left\lfloor \dfrac{i}{q} \right\rfloor, 4) = p1 \\[2em] j, & \mathrm{mod}(\left\lfloor \dfrac{i}{q} \right\rfloor, 4) = p2 \\[2em] -1, & \mathrm{mod}(\left\lfloor \dfrac{i}{q} \right\rfloor, 4) = p3 \\[2em] -j, & \mathrm{mod}(\left\lfloor \dfrac{i}{q} \right\rfloor, 4) = p4 \end{cases} ;$$

wherein, q is an integer, values of p1, p2, p3 and p4 are one of 1, 2, 3 and 4, and are different from each other; or,

$$g(i) = \begin{cases} 1, & \mathrm{mod}(\left\lfloor \dfrac{i}{q} \right\rfloor, 2) = p1 \\[2em] -1, & \mathrm{mod}(\left\lfloor \dfrac{i}{q} \right\rfloor, 2) = p3 \end{cases}$$

wherein, q is an integer, values of p1 and p3 are one of 1 and 2, and are different from each other.

In the present method, when requiring to send the M-layer data besides the N-layer data in the transmission resources (that is, in the transmission resources which are same with the above-mentioned transmission resources), the base station precodes M-layer data to be sent besides the N-layer data by using $w_b = \begin{bmatrix} u_b \\ \beta\, u_b \end{bmatrix}$, wherein $u_b$ is a vector or matrix related to the transmission resource location i; $\beta$ is a real number or a complex number related to the transmission resource location i; $\beta = -\alpha$ for same transmission resource locations; and N is an integer less than or equal to the number of base station transmission antennas.

The $u_b$ contains M columns, the nth column is $V_b^n$, and $V_b^n$ is related with i.

$$V_b^n = [1 \quad e^{j2\pi X/32} \quad e^{j4\pi X/32} \quad e^{j6\pi X/32}]^T ,$$

wherein, X is an integer, and values of the X are different for different ns .

$\alpha$ is a scalar in the following set {1,$j$,-1,-$j$}.

Specifically, $\alpha = g(i)$;

$$g(i) = \begin{cases} 1, & \mathrm{mod}(\left\lfloor \dfrac{i}{q} \right\rfloor, 4) = p1 \\[2em] j, & \mathrm{mod}(\left\lfloor \dfrac{i}{q} \right\rfloor, 4) = p2 \\[2em] -1, & \mathrm{mod}(\left\lfloor \dfrac{i}{q} \right\rfloor, 4) = p3 \\[2em] -j, & \mathrm{mod}(\left\lfloor \dfrac{i}{q} \right\rfloor, 4) = p4 \end{cases} ;$$

wherein, q is an integer, values of p1, p2, p3 and p4 are one of 1, 2, 3 and 4, and are different from each other; or,

$$g(i) = \begin{cases} 1, & \mathrm{mod}(\left\lfloor \dfrac{i}{q} \right\rfloor, 2) = p1 \\[2em] -1, & \mathrm{mod}(\left\lfloor \dfrac{i}{q} \right\rfloor, 2) = p3 \end{cases}$$

wherein, q is an integer, values of p1 and p3 are one of 1 and 2, and are different from each other.

When the N-layer data and the M-layer data belong to a same user, the $u_a$ and the $u_b$ are same or different; when a sum of the M and the N is greater than 2 and the $u_a$ and the $u_b$ are different, the columns contained in the $u_a$ are a subset of the columns contained in the $u_b$, or the columns contained in the $u_b$ are a subset of the columns contained in the $u_a$.

When the N-layer data and the M-layer data belong to different users, the $u_a$ and the $u_b$ are different; specifically, the $u_a$ and the $u_b$ are orthogonal.

The present document is described in detail by combining with the specific embodiments hereinafter.

Embodiment 1

the sending end (the base station) performs the open loop precoding on at least 2 UEs.

The open loop precoding method used by the base station is not based on the feedback of the receiving end (UE), but based on a predetermined open loop precoding mode.

For example, that open loop precoding mode is that: in a segment of transmission resources, such as Nb minimum transmission resources (Resource Element, abbreviated as REs), the base station serves 2 UEs, and each UE is of one layer.

One UE therein uses the following precoding mode:

$$w_a(i, md_a) = \begin{bmatrix} u_a \\ \alpha\, u_a \end{bmatrix} = \begin{bmatrix} v_{f_a(i)} \\ g(md_a, i)\, v_{f_a(i)} \end{bmatrix}.$$

Wherein, $u_a$ contains one column $V_a^1$, and the column is $v_{f_a(i)}$. $\alpha = (md_a, i)$.

$$v_{f_a(i)} = \begin{bmatrix} 1 & e^{j2\pi f_a(i)/32} & e^{j4\pi f_a(i)/32} & e^{j6\pi f_a(i)/32} \end{bmatrix}^{\mathrm{T}}.$$

$$g\left(md_a,i\right) = j^{(md_a+i)} ,$$

wherein, $md_a$ is an initial value, i is a resource index number, and j is an imaginary number identifier.

Another UE uses the following precoding mode:

$$w_b\left(i,md_b\right) = \begin{bmatrix} u_b \\ \beta\ u_b \end{bmatrix} = \begin{bmatrix} v_{f_b(i)} \\ g\left(md_b,i\right)v_{f_b(i)} \end{bmatrix} .$$

Wherein, $u_b$ contains one column $V_b^1$, and the column is $v_{f_b}(i)$. $\beta = g(md_b,i)$.

$$v_{f_b(i)} = \begin{bmatrix} 1 & e^{j2\pi f_b(i)/32} & e^{j4\pi f_b(i)/32} & e^{j6\pi f_b(i)/32} \end{bmatrix}^{\mathrm{T}} .$$

$g(md_b,i) = j^{(md_b+i)}$, $md_b$ is an initial value, i is a resource index number, and j is an imaginary number identifier.

$g(md_b,i)$ needs to be equal to - $g(md_a,i)$, and further $g(md_b,i)$ and the $g(md_a,i)$ can be scalars of the following set $\{1,j,-1,-j\}$.

Further,

$$g\left(md_a,i\right) = \begin{cases} 1, & \mathrm{mod}(\left\lfloor \dfrac{i}{q} \right\rfloor,4) = p1 \\[2em] j, & \mathrm{mod}(\left\lfloor \dfrac{i}{q} \right\rfloor,4) = p2 \\[2em] -1, & \mathrm{mod}(\left\lfloor \dfrac{i}{q} \right\rfloor,4) = p3 \\[2em] -j, & \mathrm{mod}(\left\lfloor \dfrac{i}{q} \right\rfloor,4) = p4 \end{cases} .$$

Wherein, q is an integer, and the values of p1, p2, p3 and p4 are one of 1, 2, 3 and 4, and are different from each other;

Or, it can be:

$$g\left(md_a,i\right) = \begin{cases} 1, & \mathrm{mod}(\left\lfloor \dfrac{i}{q} \right\rfloor,2) = p1 \\[2em] -1, & \mathrm{mod}(\left\lfloor \dfrac{i}{q} \right\rfloor,2) = p3 \end{cases} ,$$

wherein, the values of p1 and p3 are one of 1 and 2, and are different from each other;

preferably, $f_a(i) = K_a i + N_a$, and $f_b(i) = K_b i + N_b$; preferably, $v_{f_b(i)}$ and $v_{f_a(i)}$ are orthogonal, $K_a$ $N_a$ $K_b$ $N_b$ are all integers;

preferably, $f_b(i) = f_a(i) \pm 4N$ or $f_b(i) = f_a(i) \pm 8N$, wherein, N is a positive integer.

Embodiment 2

the sending end (the base station) performs the open loop precoding on at least 2 UEs.

The open loop precoding method used by the base station is not based on the feedback of the receiving end (UE), but based on a predetermined open loop precoding mode.

For example, that open loop precoding mode is that: in a segment of transmission resources, such as Nb minimum transmission resources (Resource Element, abbreviated as REs), the base station serves 2 UEs, wherein, one UE is of two layers, and one UE is of one layer.

One UE therein uses the following precoding mode:

$$w_a\left(i, md_a\right) = \begin{bmatrix} u_a \\ \alpha\, u_a \end{bmatrix} = \begin{bmatrix} v_{f_a(i)} & v_{h_a(i)} \\ g\left(md, i\right) v_{f_a(i)} & g\left(md, i\right) v_{h_a(i)} \end{bmatrix}.$$

Wherein, $u_a$ contains two columns; the first column $V_a^1$ is $v_{f_a(i)}$, and the second column $V_a^2$ is $v_{h_a(i)}$. $\alpha = g(md_a, i)$.

$$v_{f_a(i)} = \begin{bmatrix} 1 & e^{j2\pi f_a(i)/32} & e^{j4\pi f_a(i)/32} & e^{j6\pi f_a(i)/32} \end{bmatrix}^{\mathrm{T}}.$$

$$v_{h_a(i)} = \begin{bmatrix} 1 & e^{j2\pi h_a(i)/32} & e^{j4\pi h_a(i)/32} & e^{j6\pi h_a(i)/32} \end{bmatrix}^{\mathrm{T}}.$$

$g(md_a, i) = j^{(md_a + i)}$, wherein, $md_a$ is an initial value, i is a resource index number, and j is an imaginary number identifier.

Another UE uses the following precoding mode:

$$w_b\left(i, md_b\right) = \begin{bmatrix} u_b \\ \beta\, u_b \end{bmatrix} = \begin{bmatrix} v_{f_b(i)} \\ g\left(md_b, i\right) v_{f_b(i)} \end{bmatrix}.$$

Wherein, $u_b$ contains one column $V_b^1$, and the column is $v_{f_b(i)}$. $\beta = g(md_b, i)$.

$$v_{f_b(i)} = \begin{bmatrix} 1 & e^{j2\pi f_b(i)/32} & e^{j4\pi f_b(i)/32} & e^{j6\pi f_b(i)/32} \end{bmatrix}^{\mathrm{T}}.$$

$g(md_b, i) = j^{(md_b + i)}$, $md_b$ is an initial value, i is a resource index number, and j is an imaginary number identifier.

$g(md_b, i)$ needs to be equal to $-g(md_a, i)$, and further $g(md_b, i)$ and the $g(md_a, i)$ can be scalars of the following set $\{1, j, -1, -j\}$.

Further,

$$g\left(md_a,i\right) = \begin{cases} 1, & \mathrm{mod}\left(\left\lfloor \dfrac{i}{q} \right\rfloor, 4\right) = p1 \\[2em] j, & \mathrm{mod}\left(\left\lfloor \dfrac{i}{q} \right\rfloor, 4\right) = p2 \\[2em] -1, & \mathrm{mod}\left(\left\lfloor \dfrac{i}{q} \right\rfloor, 4\right) = p3 \\[2em] -j, & \mathrm{mod}\left(\left\lfloor \dfrac{i}{q} \right\rfloor, 4\right) = p4 \end{cases}.$$

Wherein, q is an integer, and the values of p1, p2, p3 and p4 are one of 1, 2, 3 and 4, and are different from each other;

Or, it can be:

$$g\left(md_a,i\right) = \begin{cases} 1, & \mathrm{mod}\left(\left\lfloor \dfrac{i}{q} \right\rfloor, 2\right) = p1 \\[2em] -1, & \mathrm{mod}\left(\left\lfloor \dfrac{i}{q} \right\rfloor, 2\right) = p3 \end{cases},$$

wherein, the values of p1 and p3 are one of 1 and 2, and are different from each other;
preferably, $f_a(i) = K_a i + N_a$, $f_b(i) = K_b i + N_b$, and $h_a(i) = \overline{K_a} i + \overline{N_a}$; preferably, $v_{f_b(i)}$ is orthogonal with both $v_{f_a(i)}$ and $v_{h_a(i)}$; preferably, $v_{f_a(i)}$ and $v_{h_a(i)}$ are the same; $K_a$, $N_a$, $K_b$, $N_b$, $\overline{K_a}$, and $\overline{N_a}$ are all integers.

Preferably, $f_b(i) = f_a(i) \pm 4N$ or $f_b(i) = f_a(i) \pm 8N$, wherein, N is a positive integer.

Preferably, $h_a(i) = f_a(i) \pm 4M$ or $h_a(i) = f_a(i) \pm 8M$, wherein, N is a positive integer.

Embodiment 3

the sending end (the base station) performs the open loop precoding on at least 2 UEs.

The open loop precoding method used by the base station is not based on the feedback of the receiving end (UE), but based on a predetermined open loop precoding mode.

Preferably, that open loop precoding mode is that: in a segment of transmission resources, such as Nb minimum transmission resources (Resource Element, abbreviated as REs), the base station serves 2 UEs, wherein, the two UEs are all of two layers.

One UE therein uses the following precoding mode:

$$w_a\left(i,md_a\right) = \begin{bmatrix} u_a \\ \alpha\, u_a \end{bmatrix} = \begin{bmatrix} v_{f_a(i)} & v_{h_a(i)} \\ g\left(md,i\right)v_{f_a(i)} & g\left(md,i\right)v_{h_a(i)} \end{bmatrix}.$$

Wherein, $u_a$ contains two columns; the first column $V_a^1$ is $v_{f_a(i)}$, and the second column $V_a^2$ is $v_{h_a(i)}$. $\alpha = g(md_a,i)$.

$$v_{f_a(i)} = \begin{bmatrix} 1 & e^{j2\pi f_a(i)/32} & e^{j4\pi f_a(i)/32} & e^{j6\pi f_a(i)/32} \end{bmatrix}^{\mathrm{T}}.$$

$$v_{h_a(i)} = \begin{bmatrix} 1 & e^{j2\pi h_a(i)/32} & e^{j4\pi h_a(i)/32} & e^{j6\pi h_a(i)/32} \end{bmatrix}^{\mathrm{T}}.$$

$g(md_a,i) = j^{(md_a+i)}$, wherein, $md_a$ is an initial value, i is a resource index number, and j is an imaginary number identifier.

Another UE uses the following precoding mode:

$$w_b(i,md_b) = \begin{bmatrix} u_b \\ \beta\, u_b \end{bmatrix} = \begin{bmatrix} v_{f_b(i)} & v_{h_b(i)} \\ g(md_b,i)v_{f_b(i)} & g(md_b,i)v_{h_b(i)} \end{bmatrix}.$$

Wherein, $u_b$ contains two columns; the first column $V_b^1$ is $v_{fb(i)}$, and the second column $V_b^2$ is $V_{hb(i)}$. $\beta = g(md_b,i)$.

$$v_{f_b(i)} = \begin{bmatrix} 1 & e^{j2\pi f_b(i)/32} & e^{j4\pi f_b(i)/32} & e^{j6\pi f_b(i)/32} \end{bmatrix}^{\mathrm{T}}.$$

$$v_{h_b(i)} = \begin{bmatrix} 1 & e^{j2\pi h_b(i)/32} & e^{j4\pi h_b(i)/32} & e^{j6\pi h_b(i)/32} \end{bmatrix}^{\mathrm{T}}.$$

$g(md_b,i) = j^{(md_b+i)}$, $md_b$ is an initial value, i is a resource index number, and j is an imaginary number identifier.

$g(md_b,i)$ needs to be equal to - $g(md_a,i)$; $g(md_b,i)$ needs to be equal to - $g(md_a,i)$ and further, $g(md_b,i)$ and the $g(md_a,i)$ can be scalars of the following set $\{1,j,-1,-j\}$.

Further,

$$g(md_a,i) = \begin{cases} 1, & \mathrm{mod}\left(\left\lfloor \dfrac{i}{q} \right\rfloor, 4\right) = p1 \\[2mm] j, & \mathrm{mod}\left(\left\lfloor \dfrac{i}{q} \right\rfloor, 4\right) = p2 \\[2mm] -1, & \mathrm{mod}\left(\left\lfloor \dfrac{i}{q} \right\rfloor, 4\right) = p3 \\[2mm] -j, & \mathrm{mod}\left(\left\lfloor \dfrac{i}{q} \right\rfloor, 4\right) = p4 \end{cases}$$

Wherein, q is an integer, and the values of p1, p2, p3 and p4 are one of 1, 2, 3 and 4, and are different from each other;

Or, it can be:

$$g(md_a,i) = \begin{cases} 1, & \mathrm{mod}\left(\left\lfloor \dfrac{i}{q} \right\rfloor, 2\right) = p1 \\[2mm] -1, & \mathrm{mod}\left(\left\lfloor \dfrac{i}{q} \right\rfloor, 2\right) = p3 \end{cases},$$

wherein, the values of p1 and p3 are one of 1 and 2, and are different from each other;

preferably, $f_a(i) = K_a i + N_a$, $f_{b(i)} = K_b i + N_b$, $h_a(i) = \overline{K_a} i + \overline{N_a}$ and $h_a(i) = \overline{K_b} i + \overline{N_b}$; preferably, $v_{f_{b(i)}}$ is orthogonal with both $v_{f_a(i)}$ and $v_{h_a(i)}$, and $v_{h_{b(i)}}$ is orthogonal with both $v_{f_a(i)}$ and $v_{h_a(i)}$; preferably, $v_{f_a(i)}$ and $v_{h_a(i)}$ are the same; preferably, $v_{f_{b(i)}}$

and $v_{h_{b(i)}}$ are the same; and $K_a$, $N_a$, $K_b$, $N_b$, $\overline{K_a}$, $\overline{N_a}$, $\overline{K_b}$, and $\overline{N_b}$ are all integers.

Preferably, $f_b(i) = f_a(i) \pm 4N$ or $f_b(i) = f_a(i) \pm 8N$, wherein, N is a positive integer.

Preferably, $h_a(i) = f_a(i) \pm 4M$ or $h_a(i) = f_a(i) \pm 8M$, wherein, N is a positive integer.

Embodiment 4

the sending end (the base station) performs the open loop precoding on at least 1 UE.

The open loop precoding method used by the base station is not based on the feedback of the receiving end (UE), but based on a predetermined open loop precoding mode.

Preferably, that open loop precoding mode is that: in a segment of transmission resources, such as Nb minimum transmission resources (Resource Element, abbreviated as REs), the base station serves 1 UE, wherein, the UE is of one layer transmission.

The UE uses the following precoding mode:

$$w_a\left(i, md_a\right) = \begin{bmatrix} u_a \\ \alpha\, u_a \end{bmatrix} = \begin{bmatrix} v_{f_a(i)} \\ g\left(md_a, i\right) v_{f_a(i)} \end{bmatrix}.$$

Wherein, $u_a$ contains one column $V_a^1$; the column is $v_{f_a(i)}$. $\alpha = g(md_a, i)$.

$$v_{f_a(i)} = \begin{bmatrix} 1 & e^{j2\pi f_a(i)/32} & e^{j4\pi f_a(i)/32} & e^{j6\pi f_a(i)/32} \end{bmatrix}^{\mathrm{T}}.$$

$g(md_a, i) = j^{(md_a + i)}$, wherein, $md_a$ is an initial value, i is a resource index number, and j is an imaginary number identifier.

Preferably,

$$f_a\left(i\right) = K_a i + N_a.$$

Embodiment 5

the sending end (the base station) performs the open loop precoding on at least 1 UE.

The open loop precoding method used by the base station is not based on the feedback of the receiving end (UE), but based on a predetermined open loop precoding mode.

Preferably, that open loop precoding mode is that: in a segment of transmission resources, such as Nb minimum transmission resources (Resource Element, abbreviated as REs), the base station serves 1 UE, wherein, the UE is of two-layer transmission.

The UE uses the following precoding mode:

one layer of the UE uses the following precoding mode:

$$w_a\left(i, md_a\right) = \begin{bmatrix} u_a \\ \alpha\, u_a \end{bmatrix} = \begin{bmatrix} v_{f_a(i)} \\ g\left(md_a, i\right) v_{f_a(i)} \end{bmatrix}.$$

Wherein, $u_a$ contains one column $V_a^1$; the column is $v_{f_a(i)}$. $\alpha = g(md_a, i)$.

$$v_{f_a(i)} = \begin{bmatrix} 1 & e^{j2\pi f_a(i)/32} & e^{j4\pi f_a(i)/32} & e^{j6\pi f_a(i)/32} \end{bmatrix}^{\mathrm{T}}.$$

$g(md_a, i) = j^{(md_a + i)}$, wherein, $md_a$ is an initial value, i is a resource index number, and j is an imaginary number identifier.

Another layer of the UE uses the following precoding mode:

$$w_b\left(i,md_b\right)=\begin{bmatrix}u_b\\\beta\ u_b\end{bmatrix}=\begin{bmatrix}v_{f_b(i)}\\g\left(md_b,i\right)v_{f_b(i)}\end{bmatrix}.$$

Wherein, $u_b$ contains one column $V_b^1$; the column is $v_{f_b(i)}$. $\beta = g(md_b,i)$.

$$v_{f_b(i)}=\begin{bmatrix}1 & e^{j2\pi f_b(i)/32} & e^{j4\pi f_b(i)/32} & e^{j6\pi f_b(i)/32}\end{bmatrix}^{\mathrm{T}}.$$

$g(md_b,i) = j^{(md_b+i)}$, wherein, $md_b$ is an initial value, i is a resource index number, and j is an imaginary number identifier.
$g(md_b,i)$ needs to be equal to $-g(md_a,i)$.
Preferably, $f_a(i) = K_a i + N_a$, and $f_b(i) = K_b i + N_b$; preferably, $v_{f_b(i)}$ and $v_{f_a(i)}$ are the same; and $K_a$, $N_a$, $K_b$ and $N_b$ are all integers.
Preferably, it can be that $v_{f_b(i)}$ and $v_{f_a(i)}$ are different; $f_b(i) = f_a(i) \pm N$, wherein, N is an integer in 0-4.

Embodiment 6

the sending end (the base station) performs the open loop precoding on at least 2 UEs.
The open loop precoding method used by the base station is not based on the feedback of the receiving end (UE), but based on a predetermined open loop precoding mode.
Preferably, that open loop precoding mode is that: in a segment of transmission resources, such as Nb minimum transmission resources (Resource Element, abbreviated as REs), the base station serves 1 UE, wherein, the UE is of four layers.
Tow layers therein use the following precoding mode:

$$w_a\left(i,md_a\right)=\begin{bmatrix}u_a\\\alpha\ u_a\end{bmatrix}=\begin{bmatrix}v_{f_a(i)} & v_{h_a(i)}\\g\left(md,i\right)v_{f_a(i)} & g\left(md,i\right)v_{h_a(i)}\end{bmatrix}.$$

Wherein, $u_a$ contains two columns; the first column $V_a^1$ is $v_{f_a(i)}$, and the second column $V_a^2$ is $v_{h_a(i)}$. $\alpha = g(md_a,i)$.

$$v_{f_a(i)}=\begin{bmatrix}1 & e^{j2\pi f_a(i)/32} & e^{j4\pi f_a(i)/32} & e^{j6\pi f_a(i)/32}\end{bmatrix}^{\mathrm{T}}.$$

$$v_{h_a(i)}=\begin{bmatrix}1 & e^{j2\pi h_a(i)/32} & e^{j4\pi h_a(i)/32} & e^{j6\pi h_a(i)/32}\end{bmatrix}^{\mathrm{T}}.$$

$g(md_a,i) = j^{(md_a+i)}$, wherein, $md_a$ is an initial value, i is a resource index number, and j is an imaginary number identifier.
Another two layers use the following precoding mode:

$$w_b\left(i,md_b\right)=\begin{bmatrix}u_b\\\beta\ u_b\end{bmatrix}=\begin{bmatrix}v_{f_b(i)} & v_{h_b(i)}\\g\left(md_b,i\right)v_{f_b(i)} & g\left(md_b,i\right)v_{h_b(i)}\end{bmatrix}.$$

Wherein, $u_b$ contains two columns; the first column $V_b^1$ is $v_{f_b(i)}$, and the second column $V_b^2$ is $v_{h_b(i)}$. $\beta = g(md_b,i)$.

$$v_{f_b(i)} = \begin{bmatrix} 1 & e^{j2\pi f_b(i)/32} & e^{j4\pi f_b(i)/32} & e^{j6\pi f_b(i)/32} \end{bmatrix}^{\mathrm{T}}.$$

$$v_{h_b(i)} = \begin{bmatrix} 1 & e^{j2\pi h_b(i)/32} & e^{j4\pi h_b(i)/32} & e^{j6\pi h_b(i)/32} \end{bmatrix}^{\mathrm{T}}.$$

$g(md_b, i) = j^{(md_b + i)}$, $md_b$ is an initial value, i is a resource index number, and j is an imaginary number identifier.

$g(md_b, i)$ needs to be equal to $- g(md_a, i)$.

preferably, $f_a(i) = K_a i + N_a$, $f_b(i) = K_b i + N_b$, $h_a(i) = \overline{K_a} i + \overline{N_a}$ and $h_a(i) = \overline{K_b} i + \overline{N_b}$; and $K_a$, $N_a$, $K_b$, $N_b$, $\overline{K_a}$, $\overline{N_a}$, $\overline{K_b}$, and $\overline{N_b}$ are all integers.

Preferably, $v_{f_b(i)}$ and $v_{f_a(i)}$ are different; $f_b(i) = f_a(i) \pm N$, wherein, N is an integer in 0-8.

Preferably, $v_{h_a(i)}$ is equal to $v_{f_a(i)}$, and $v_{h_b(i)}$ is equal to $v_{f_b(i)}$.

It is described by providing the specific embodiments hereinafter.

Specific embodiment 1

the sending end (the base station) performs the open loop precoding on at least 2 UEs.

The open loop precoding method used by the base station is not based on the feedback of the receiving end (UE), but based on a predetermined open loop precoding mode.

Preferably, that open loop precoding mode is that: in a segment of transmission resources, such as Nb minimum transmission resources (Resource Element, abbreviated as REs), the base station serves 2 UEs, and each UE is of one layer.

One UE therein uses the following precoding mode:

$$w_a(i, md_a) = \begin{cases} W_0^{\{1\}}, & \mathrm{mod}(\left\lfloor \dfrac{i}{q} \right\rfloor, 4) = p1 \\[2ex] W_2^{\{1\}}, & \mathrm{mod}(\left\lfloor \dfrac{i}{q} \right\rfloor, 4) = p2 \\[2ex] W_8^{\{1\}}, & \mathrm{mod}(\left\lfloor \dfrac{i}{q} \right\rfloor, 4) = p3 \\[2ex] W_{10}^{\{1\}}, & \mathrm{mod}(\left\lfloor \dfrac{i}{q} \right\rfloor, 4) = p4 \end{cases}$$

Wherein, q is an integer, and the values of p1, p2, p3 and p4 are one of 1, 2, 3 and 4, and are different from each other;

$W_0^{\{1\}}$, $W_2^{\{1\}}$, $W_8^{\{1\}}$ and $W_{10}^{\{1\}}$ are same with the definition in the LTE 4 antenna codebook. $md_a$ is a parameter related to the number of layers or the mode.

Another user uses the following precoding mode:

$$w_b\left(i,md_b\right) = \begin{cases} W_1^{\{1\}}, & \mathrm{mod}(\left\lfloor \dfrac{i}{q} \right\rfloor,4) = q1 \\[1em] W_3^{\{1\}}, & \mathrm{mod}(\left\lfloor \dfrac{i}{q} \right\rfloor,4) = q2 \\[1em] W_9^{\{1\}}, & \mathrm{mod}(\left\lfloor \dfrac{i}{q} \right\rfloor,4) = q3 \\[1em] W_{11}^{\{1\}}, & \mathrm{mod}(\left\lfloor \dfrac{i}{q} \right\rfloor,4) = q4 \end{cases}$$

Wherein, q is an integer, and the values of q1, q2, q3 and q4 are one of 1, 2, 3 and 4, and are different from each other;

$W_1^{\{1\}}$, $W_3^{\{1\}}$, $W_9^{\{1\}}$ and $W_{11}^{\{1\}}$ are same with the definition in the LTE 4 antenna codebook. *mdb* is a parameter related to the number of layers or the mode.

Specific embodiment 2

the sending end (the base station) performs the open loop precoding on at least 1 UE.
The open loop precoding method used by the base station is not based on the feedback of the receiving end (UE), but based on a predetermined open loop precoding mode.
Preferably, that open loop precoding mode is that: in a segment of transmission resources, such as Nb minimum transmission resources (Resource Element, abbreviated as REs), the base station serves 1 UE, and the UE is of two-layer transmission.
The UE uses the following precoding mode:

$$w(i) = \begin{cases} W_1^{\{1,2\}}, & \mathrm{mod}(\left\lfloor \dfrac{i}{q} \right\rfloor,4) = p1 \\[1em] W_2^{\{1,2\}}, & \mathrm{mod}(\left\lfloor \dfrac{i}{q} \right\rfloor,4) = p2 \\[1em] W_3^{\{1,2\}}, & \mathrm{mod}(\left\lfloor \dfrac{i}{q} \right\rfloor,4) = p3 \\[1em] W_8^{\{1,2\}}, & \mathrm{mod}(\left\lfloor \dfrac{i}{q} \right\rfloor,4) = p4 \end{cases}$$

Wherein, q is an integer, and the values of p1, p2, p3 and p4 are one of 1, 2, 3 and 4, and are different from each other; $W_1^{\{1,2\}}$, $W_2^{\{1,2\}}$, $W_3^{\{1,2\}}$ and $W_8^{\{1,2\}}$ are same with the definition in the LTE 4 antenna codebook.
The present document further includes a precoding indication method for open loop spatial multiplexing, including: a base station determining precoding modes of data of all layers to be sent, and notifying terminals corresponding to the data of all layers of the precoding modes corresponding to the data of all layers.
Here, the precoding mode refers to the number of precoding operations performed to the data to be sent and the number of the data layers processed in every precoding operation. For example, for a terminal with 2-layer data to be sent totally, one of the usable precoding modes is to perform a whole 2-layer precoding on the 2-layer data; another precoding mode is to perform 1 layer precoding on 1 layer therein and perform 1 layer precoding on another layer therein.
The terminals calculate and report channel quality indications according to acquired precoding modes of data of all layers.
It is worth to be indicated that, in this text, every column of the described vector or matrix being multiplied by a constant coefficient belongs to the equivalent transform of the present document, and will not influence the implementation effect of the present document.

In addition, as to all matrixes of the present document, performing an arbitrary column exchange on a column contained therein belongs to the equivalent transform, and will not influence its implementation effect.

It should be illustrated that, in the case of not conflicting, the embodiments in the present application and features in these embodiments can be combined with each other.

Certainly, the present document can have a variety of other embodiments. Those skilled in the art can make the corresponding modifications and variations according to the present document without departing from the scope of the present document. And all of these modifications or the variations should be embodied in the scope of the appended claims of the present document.

It can be understood by those skilled in the art that all or part of steps in the above-mentioned method can be fulfilled by programs instructing the relevant hardware components, and the programs can be stored in a computer readable storage medium such as a read only memory, a magnetic disk or an optical disk, etc. Alternatively, all or part of the steps in the above-mentioned embodiments can be implemented with one or more integrated circuits. Accordingly, each module/unit in the above-mentioned embodiments can be implemented in the form of hardware, or in the form of software function module. The present document is not limit to any specific form of the combination of the hardware and software.

Industrial Applicability

The embodiment of the present document can implement effective precoding in the case of open loop spatial multiplexing, and also can support multiple antennas (such as 8 transmission antennas) application.

**Claims**

1. A precoding method for open loop spatial multiplexing, **characterized by** comprising:

   in transmission resources, a base station precoding N-layer data to be sent by using $w_a = \begin{bmatrix} u_a \\ \alpha \cdot u_a \end{bmatrix}$, wherein $u_a$ is a vector or matrix related to a transmission resource location i; $\alpha$ is a real number or a complex number related to the transmission resource location i and $\alpha$ is a scalar in a following set $\{1, j, -1, -j\}$; and N is an integer less than or equal to a number of base station transmission antennas;

   wherein,

   $\alpha = g(i)$;

$$g(i) = \begin{cases} 1, & \mathrm{mod}\left(\left\lfloor \dfrac{i}{q} \right\rfloor, 4\right) = p1 \\[2mm] j, & \mathrm{mod}\left(\left\lfloor \dfrac{i}{q} \right\rfloor, 4\right) = p2 \\[2mm] -1, & \mathrm{mod}\left(\left\lfloor \dfrac{i}{q} \right\rfloor, 4\right) = p3 \\[2mm] -j, & \mathrm{mod}\left(\left\lfloor \dfrac{i}{q} \right\rfloor, 4\right) = p4 \end{cases};$$

   wherein, q is an integer, values of p1, p2, p3 and p4 are one of 1, 2, 3 and 4, and are different from each other, and i is a resource index number; or,

$$g(i) = \begin{cases} 1, & \mod\left(\left\lfloor \dfrac{i}{q} \right\rfloor, 2\right) = p1 \\ -1, & \mod\left(\left\lfloor \dfrac{i}{q} \right\rfloor, 2\right) = p3 \end{cases}$$

wherein, q is an integer, values of p1 and p3 are one of 1 and 2, and are different from each other, and i is a resource index number.

2. The method according to claim 1, wherein,

the $u_a$ contains N columns, the $n^{th}$ column is $V_a^n$, and $V_a^n$ is related with i.

3. The method according to claim 2, wherein,

$$V_a^n = \begin{bmatrix} 1 & e^{j2\pi X/32} & e^{j4\pi X/32} & e^{j6\pi X/32} \end{bmatrix}^T,$$

wherein, X is an integer, and values of the X are different for different n.

4. The method according to claim 1, 2 or 3, wherein,
in the transmission resources, the base station precodes M-layer data to be sent besides the N-layer data by using

$$w_b = \begin{bmatrix} u_b \\ \beta \cdot u_b \end{bmatrix},$$
wherein $u_b$ is a vector or matrix related to the transmission resource location i; $\beta$ is a real number or a complex number related to the transmission resource location i; $\beta = -\alpha$ for same transmission resource locations; and N is an integer less than or equal to the number of base station transmission antennas.

5. The method according to claim 4, wherein,

the $u_b$ contains M columns, the $n^{th}$ column is $V_b^n$, and $V_b^n$ is related with i, wherein,

$$V_b^n = \begin{bmatrix} 1 & e^{j2\pi X/32} & e^{j4\pi X/32} & e^{j6\pi X/32} \end{bmatrix}^T,$$

wherein, X is an integer, and values of the X are different for different n,
or,
wherein,
when the N-layer data and the M-layer data belong to a same user, the $u_a$ and the $u_b$ are same or different; when a sum of the M and the N is greater than 2 and the $u_a$ and the $u_b$ are different, the columns contained in the $u_a$ are a subset of the columns contained in the $u_b$, or the columns contained in the $u_b$ are a subset of the columns contained in the $u_a$.

6. The method according to claim 4, wherein,
when the N-layer data and the M-layer data belong to different users, the $u_a$ and the $u_b$ are different.

7. The method according to claim 6, wherein,
the $u_a$ and the $u_b$ are orthogonal.

8. The method according to any one of claims 1 to 7, further comprising:
the base station determining precoding modes of data of all layers to be sent, and notifying terminals corresponding to the data of all layers of the precoding modes corresponding to the data of all layers.

9. The method according to claim 8, wherein,
the precoding mode refers to a number of precoding operations performed on the data to be sent and a number of the data layers processed in every precoding operation,
or,
wherein,
the terminals calculate and report channel quality indications according to acquired precoding modes of the data of all layers.

10. A precoding system for open loop spatial multiplexing, **characterized by** comprising a base station device; wherein, the base station device is configured to: in transmission resources, precode N-layer data to be sent by using

$$w_a = \begin{bmatrix} u_a \\ \alpha \cdot u_a \end{bmatrix},$$

wherein, $u_a$ is a vector or matrix related to a transmission resource location i; $\alpha$ is a real number or a complex number related to the transmission resource location i and $\alpha$ is a scalar in a following set $\{1, j, -1, -j\}$; and N is an integer less than or equal to a number of base station transmission antennas;
wherein,
$\alpha = g(i)$;

$$g(i) = \begin{cases} 1, & \mathrm{mod}(\left\lfloor \dfrac{i}{q} \right\rfloor, 4) = p1 \\ j, & \mathrm{mod}(\left\lfloor \dfrac{i}{q} \right\rfloor, 4) = p2 \\ -1, & \mathrm{mod}(\left\lfloor \dfrac{i}{q} \right\rfloor, 4) = p3 \\ -j, & \mathrm{mod}(\left\lfloor \dfrac{i}{q} \right\rfloor, 4) = p4 \end{cases};$$

wherein, q is an integer, values of p1, p2, p3 and p4 are one of 1, 2, 3 and 4, and are different from each other, and i is a resource index number; or,

$$g(i) = \begin{cases} 1, & \mathrm{mod}(\left\lfloor \dfrac{i}{q} \right\rfloor, 2) = p1 \\ -1, & \mathrm{mod}(\left\lfloor \dfrac{i}{q} \right\rfloor, 2) = p3 \end{cases}$$

wherein, q is an integer, values of p1 and p3 are one of 1 and 2, and are different from each other, and i is a resource index number.

11. The system according to claim 10, wherein,
the $u_a$ contains N columns, the n-th column is $V_a^n$, and $V_a^n$ is related with i; and

$$V_a^n = [1 \quad e^{j2\pi X/32} \quad e^{j4\pi X/32} \quad e^{j6\pi X/32}]^T,$$

wherein, X is an integer, and values of the X are different for different n.

12. The system according to claim 10 or 11, wherein,
the base station device is further configured to: in the transmission resources, precode M-layer data to be sent

$$w_b = \begin{bmatrix} u_b \\ \beta \cdot u_b \end{bmatrix},$$

besides the N-layer data by using wherein $u_b$ is a vector or matrix related to the transmission resource location i; $\beta$ is a real number or a complex number related to the transmission resource location i; $\beta = -\alpha$ for same transmission resource locations; and N is an integer less than or equal to the number of base station transmission antennas.

13. The system according to claim 12, wherein,

the $u_b$ contains M columns, the nth column is $V_b^n$, and $V_b^n$ is related with i,

or,

wherein,

when the N-layer data and the M-layer data belong to a same user, the $u_a$ and the $u_b$ are same or different; when a sum of the M and the N is greater than 2 and the $u_a$ and the $u_b$ are different, the columns contained in the $u_a$ are a subset of the columns contained in the $u_b$, or the columns contained in the $u_b$ are a subset of the columns contained in the $u_a$; and

when the N-layer data and the M-layer data belong to different users, the $u_a$ and the $u_b$ are orthogonal.

**Patentansprüche**

1. Ein Vorcodierungsverfahren für räumliches Multiplexen mit offener Schleife, **dadurch gekennzeichnet, dass** es umfasst:

in Senderessourcen, eine Basisstation, die zu sendende N-Schicht-Daten unter Verwendung von $w_\alpha = \begin{bmatrix} u_a \\ \alpha \cdot u_a \end{bmatrix}$ vorcodiert, wobei $u_a$ ein Vektor oder eine Matrix ist, der/die mit einer Senderessourcenstelle i in Zusammenhang steht; $\alpha$ eine reelle Zahl oder eine komplexe Zahl ist, die mit der Senderessourcenstelle i in Zusammenhang steht und $\alpha$ ein Skalar in dem folgenden Satz $\{1, j, -1, -j\}$ ist; und N eine ganze Zahl kleiner oder gleich einer Zahl von Basisstation-Sendeantennen ist;
wobei
$\alpha = g(i);$

$$g(i) = \begin{cases} 1, & mod\left(\left\lfloor \frac{i}{q} \right\rfloor, 4\right) = p1 \\ j, & mod\left(\left\lfloor \frac{i}{q} \right\rfloor, 4\right) = p2 \\ -1, & mod\left(\left\lfloor \frac{i}{q} \right\rfloor, 4\right) = p3 \\ -j, & mod\left(\left\lfloor \frac{i}{q} \right\rfloor, 4\right) = p4 \end{cases};$$

wobei q eine ganze Zahl ist, Werte von p1, p2, p3 und p4 einer von 1, 2, 3 und 4 sind und sich voneinander unterscheiden, und $i$ eine Ressourcenindexzahl ist; oder

$$g(i) = \begin{cases} 1, & mod\left(\left\lfloor \frac{i}{q} \right\rfloor, 2\right) = p1 \\ -1, & mod\left(\left\lfloor \frac{i}{q} \right\rfloor, 2\right) = p3 \end{cases}$$

wobei q eine ganze Zahl ist, Werte von p1 und p3 einer von 1 und 2 sind und sich voneinander unterscheiden, und *i* eine Ressourcenindexzahl ist.

2. Das Verfahren nach Anspruch 1, wobei

das $u_a$ N Spalten enthält, die n-te Spalte $V_a^n$ ist, und $V_a^n$ mit i in Zusammenhang steht.

3. Das Verfahren nach Anspruch 2, wobei,

$$V_a^n = [1 \quad e^{j2\Pi X/32} \quad e^{j4\Pi X/32} \quad e^{j6\Pi X/32}]^T,$$

wobei X eine ganze Zahl ist, und Werte des X für verschiedene n unterschiedlich sind.

4. Das Verfahren nach Anspruch 1, 2 oder 3, wobei
in den Senderessourcen die Basisstation zu sendende M-Schicht-Daten neben den N-Schicht-Daten unter Verwen-
dung von $w_b = \begin{bmatrix} u_b \\ \beta \cdot u_b \end{bmatrix}$ vorcodiert, wobei $u_b$ ein Vektor oder eine Matrix ist, der/die mit der Senderessourcenstelle i in Zusammenhang steht; $\beta$ eine reelle Zahl oder eine komplexe Zahl ist, die mit der Senderessourcenstelle i in Zusammenhang steht; $\beta = -\alpha$ für dieselben Senderessourcenstellen; und N eine ganze Zahl kleiner oder gleich der Zahl von Basisstation-Sendeantennen ist.

5. Das Verfahren nach Anspruch 4, wobei

das $u_b$ M Spalten enthält, die n-te Spalte $V_b^n$ ist und $V_b^n$ mit i in Zusammenhang steht, wobei

$$V_b^n = [1 \quad e^{j2\Pi X/32} \quad e^{j4\Pi X/32} \quad e^{j6\Pi X/32}]^T,$$

wobei X eine ganze Zahl ist, und Werte des X für verschiedene n unterschiedlich sind,
oder
wobei,
wenn die N-Schicht-Daten und die M-Schicht-Daten zu einem selben Benutzer gehören, das $u_a$ und das $u_b$ dieselben oder verschieden sind; wenn eine Summe des M und des N größer als 2 ist und das $u_a$ und das $u_b$ verschieden sind, die Spalten, die im $u_a$ enthalten sind, ein Teilsatz der Spalten sind, die im $u_b$ enthalten sind, oder die Spalten die im $u_b$ enthalten sind, ein Teilsatz der Spalten sind, die im $u_a$ enthalten sind.

6. Das Verfahren nach Anspruch 4, wobei,
wenn die N-Schicht-Daten und die M-Schicht-Daten zu verschiedenen Benutzern gehören, das $u_a$ und das $u_b$ verschieden sind.

7. Das Verfahren nach Anspruch 6, wobei
das $u_a$ und das $u_b$ orthogonal sind.

8. Das Verfahren nach einem der Ansprüche 1 bis 7, weiter umfassend:
Bestimmen, durch die Basisstation, von Vorcodierungsmodi von Daten aller zu sendenden Schichten und Benachrichtigen von Endgeräten entsprechend den Daten aller Schichten bezüglich der Vorcodierungsmodi entsprechend den Daten aller Schichten.

9. Das Verfahren nach Anspruch 8, wobei
der Vorcodierungsmodus sich auf eine Zahl von Vorcodierungsoperationen, die an den zu sendenden Daten durchgeführt werden, und eine Zahl der Datenschichten, die in jeder Vorcodierungsoperation verarbeitet werden, bezieht,
oder
wobei
die Endgeräte Kanalqualitätsangaben gemäß erlangten Vorcodierungsmodi der Daten aller Schichten berechnen und berichten.

10. Ein Vorcodierungssystem für räumliches Multiplexen mit offener Schleife, **dadurch gekennzeichnet, dass** es eine Basisstationsvorrichtung umfasst; wobei
die Basisstationsvorrichtung konfiguriert ist zum: in Senderessourcen, Vorcodieren von zu sendenden N-Schicht-Daten unter Verwendung von $w_a = \begin{bmatrix} u_a \\ \alpha \cdot u_a \end{bmatrix}$, wobei $u_a$ ein Vektor oder eine Matrix ist, der/die mit einer Senderessourcenstelle i in Zusammenhang steht; $\alpha$ eine reelle Zahl oder eine komplexe Zahl ist, die mit der Senderessourcenstelle i in Zusammenhang steht und $\alpha$ ein Skalar in dem folgenden Satz {1,j,-1,-j} ist; und N eine ganze Zahl kleiner oder gleich einer Zahl von Basisstation-Sendeantennen ist;
wobei
$\alpha = g(i)$;

$$g(i) = \begin{cases} 1, & mod\left(\left\lfloor \frac{i}{q} \right\rfloor, 4\right) = p1 \\ j, & mod\left(\left\lfloor \frac{i}{q} \right\rfloor, 4\right) = p2 \\ -1, & mod\left(\left\lfloor \frac{i}{q} \right\rfloor, 4\right) = p3 \\ -j, & mod\left(\left\lfloor \frac{i}{q} \right\rfloor, 4\right) = p4 \end{cases};$$

wobei q eine ganze Zahl ist, Werte von p1, p2, p3 und p4 einer von 1, 2, 3 und 4 sind und sich voneinander unterscheiden, und *i* eine Ressourcenindexzahl ist; oder

$$g(i) = \begin{cases} 1, & mod\left(\left\lfloor \frac{i}{q} \right\rfloor, 2\right) = p1 \\ -1, & mod\left(\left\lfloor \frac{i}{q} \right\rfloor, 2\right) = p3 \end{cases}$$

wobei q eine ganze Zahl ist, Werte von p1 und p3 einer von 1 und 2 sind, und sich voneinander unterscheiden, und i eine Ressourcenindexzahl ist.

11. Das System nach Anspruch 10, wobei

das $u_a$ N Spalten enthält, die n-te Spalte $V_a^n$ ist, und $V_a^n$ mit i in Zusammenhang steht; und

$V_a^n = [1 \ e^{j2\Pi X/32} \ e^{j4\Pi X/32} \ e^{j6\Pi X/32}]^\mathsf{T}$, wobei X eine ganze Zahl ist, und Werte des X für verschiedene n unterschiedlich sind.

12. Das System nach Anspruch 10 oder 11, wobei
die Basisstationsvorrichtung weiter konfiguriert ist zum: in den Senderessourcen, Vorcodieren von zu sendenden M-Schicht-Daten neben den N-Schicht-Daten unter Verwendung von $w_b = \begin{bmatrix} u_b \\ \beta \cdot u_b \end{bmatrix}$, wobei $u_b$ ein Vektor oder eine Matrix ist, der/die mit einer Senderessourcenstelle i in Zusammenhang steht; $\beta$ eine reelle Zahl oder eine komplexe Zahl ist, die mit der Senderessourcenstelle i in Zusammenhang steht; $\beta = -\alpha$ für dieselben Senderessour-censtellen; und N eine ganze Zahl kleiner oder gleich der Zahl von Basisstation-Sendeantennen ist.

13. Das System nach Anspruch 12, wobei

das $u_b$ M Spalten enthält, die n-te Spalte $V_b^n$ ist, und $V_b^n$ mit i in Zusammenhang steht,
oder

wobei

wenn die N-Schicht-Daten und die M-Schicht-Daten zu einem selben Benutzer gehören, das $u_a$ und das $u_b$ dieselben oder verschieden sind; wenn eine Summe des M und des N größer als 2 ist und das $u_a$ und das $u_b$ verschieden sind, die Spalten, die im $u_a$ enthalten sind, ein Teilsatz der Spalten sind, die im $u_b$ enthalten sind, oder die Spalten die im $u_b$ enthalten sind, ein Teilsatz der Spalten sind, die im $u_a$ enthalten sind; und

wenn die N-Schicht-Daten und die M-Schicht-Daten zu verschiedenen Benutzern gehören, das $u_a$ und das $u_b$ orthogonal sind.

**Revendications**

1. Un procédé de précodage pour multiplexage spatial en boucle ouverte, **caractérisé en ce qu'**il comprend :

   dans des ressources de transmission, une station de base précodant des données de couche N à envoyer en utilisant $w_a = \begin{bmatrix} u_a \\ \alpha \cdot u_a \end{bmatrix}$ dans lequel $u_a$ est un vecteur ou une matrice liée à un emplacement de ressource de transmission i ;

   $\alpha$ est un nombre réel ou un nombre complexe lié à l'emplacement de ressource de transmission i et $\alpha$ est un scalaire dans un ensemble suivant $\{1, j, -1, -j\}$ ; et N est un entier inférieur ou égal à un nombre d'antennes de transmission de station de base ;

   dans lequel,

   $\alpha = g(i)$;

   $$g(i) = \begin{cases} 1, & mod\left(\left\lfloor \frac{i}{q} \right\rfloor, 4\right) = p1 \\ j, & mod\left(\left\lfloor \frac{i}{q} \right\rfloor, 4\right) = p2 \\ -1, & mod\left(\left\lfloor \frac{i}{q} \right\rfloor, 4\right) = p3 \\ -j, & mod\left(\left\lfloor \frac{i}{q} \right\rfloor, 4\right) = p4 \end{cases};$$

   dans lequel, q est un entier, les valeurs de p1, p2, p3 et p4 sont l'une de 1, 2, 3 et 4 et diffèrent les unes des autres, et $i$ est un numéro d'indice de ressource ; ou

   $$g(i) = \begin{cases} 1, & mod\left(\left\lfloor \frac{i}{q} \right\rfloor, 2\right) = p1 \\ -1, & mod\left(\left\lfloor \frac{i}{q} \right\rfloor, 2\right) = p3 \end{cases}$$

   dans lequel, q est un entier, les valeurs de p1 et p3 sont l'une de 1 et 2, et diffèrent l'une de l'autre, et $i$ est un numéro d'indice de ressource.

2. Le procédé selon la revendication 1, dans lequel

   la $u_a$ contient N colonnes, la n$^{\text{ième}}$ colonne est $V_a^n$ et $V_a^n$ est liée à i.

3. Le procédé selon la revendication 2, dans lequel

   $$V_a^n = [1 \; e^{j2\pi X/32} \; e^{j4\pi X/32} \; e^{j6\pi X/32}]^T,$$

   dans lequel, X est un entier et les valeurs de X sont différentes pour un n différent.

**4.** Le procédé selon la revendication 1, 2 ou 3, dans lequel,
dans les ressources de transmission, la station de base précode des données de couche M à envoyer en plus des données de couche N en utilisant $w_b = \begin{bmatrix} u_b \\ \beta \cdot u_b \end{bmatrix}$, dans lequel $u_b$ est un vecteur ou une matrice liée à l'emplacement de ressource de transmission i ; $\beta$ est un nombre réel ou un nombre complexe lié à l'emplacement de ressource de transmission i ; $\beta = -\alpha$ pour les mêmes emplacements de ressource de transmission; et N est un entier inférieur ou égal au nombre d'antennes de transmission de station de base.

**5.** Le procédé selon la revendication 4, dans lequel

la $u_b$ contient M colonnes, la $n^{\text{ième}}$ colonne est $V_b^n$ et $V_b^n$ est liée à i,
dans lequel,

$$V_b^n = [1 \quad e^{j2\pi X/32} \quad e^{j4\pi X/32} \quad e^{j6\pi X/32}]^T,$$

dans lequel, X est un entier, et les valeurs du X sont différentes pour un n différent,
ou,
dans lequel,
lorsque les données de couche N et les données de couche M appartiennent à un même utilisateur, la $u_a$ et la $u_b$ sont les mêmes ou différentes ; quand une somme du M et du N est plus grande que 2 et que la $u_a$ et la $u_b$ sont différentes, les colonnes contenues dans la $u_a$ sont un sous-ensemble des colonnes contenues dans la $u_b$, ou les colonnes contenues dans la $u_b$ sont un sous-ensemble des colonnes contenues dans la $u_a$.

**6.** Le procédé selon la revendication 4, dans lequel
lorsque les données de couche N et les données de couche M appartiennent à des utilisateurs différents, la $u_a$ et la $u_b$ sont différentes.

**7.** Le procédé selon la revendication 6, dans lequel
la $u_a$ et la $u_b$ sont orthogonales.

**8.** Le procédé selon l'une quelconque des revendications 1 à 7, comprenant en outre :
la station de base déterminant des modes de précodage de données de toutes les couches à envoyer, et notifiant des terminaux correspondant aux données de toutes les couches des modes de précodage correspondant aux données de toutes les couches.

**9.** Le procédé selon la revendication 8, dans lequel
le mode de précodage se réfère à un nombre d'opérations de précodage effectuées sur les données à envoyer et à un nombre des couches de données traitées dans chaque opération de précodage,
ou,
dans lequel,
les bornes calculent et rapportent des indications de qualité de canal selon des modes de précodage acquis des données de toutes les couches.

**10.** Un système de précodage pour multiplexage spatial en boucle ouverte, **caractérisé en ce qu'**il comprend un dispositif de station de base ; dans lequel
le dispositif de station de base est configuré pour : dans des ressources de transmission, précoder des données de couche N à envoyer en utilisant $w_a = \begin{bmatrix} u_a \\ \alpha \cdot u_a \end{bmatrix}$, dans lequel, $u_a$ est un vecteur ou une matrice liée à un emplacement de ressource de transmission i ; $\alpha$ est un nombre réel ou un nombre complexe lié à l'emplacement de ressource de transmission i et $\alpha$ est un scalaire dans un ensemble suivant $\{1, j, -1, -j\}$ ; et N est un entier inférieur ou égal à un nombre d'antennes de transmission de station de base ;
dans lequel,
$\alpha = g(i)$;

$$g(i) = \begin{cases} 1, & mod\left(\left\lfloor \dfrac{i}{q} \right\rfloor, 4\right) = p1 \\ j, & mod\left(\left\lfloor \dfrac{i}{q} \right\rfloor, 4\right) = p2 \\ -1, & mod\left(\left\lfloor \dfrac{i}{q} \right\rfloor, 4\right) = p3 \\ -j, & mod\left(\left\lfloor \dfrac{i}{q} \right\rfloor, 4\right) = p4 \end{cases};$$

dans lequel, q est un entier, les valeurs de p1, p2, p3 et p4 sont l'une de 1, 2, 3 et 4, et diffèrent les unes des autres, et $i$ est un numéro d'indice de ressource ; ou,

$$g(i) = \begin{cases} 1, & mod\left(\left\lfloor \dfrac{i}{q} \right\rfloor, 2\right) = p1 \\ -1, & mod\left(\left\lfloor \dfrac{i}{q} \right\rfloor, 2\right) = p3 \end{cases}$$

dans lequel, q est un entier, les valeurs de p1 et p3 sont l'une de 1 et 2 et diffèrent l'une de l'autre, et $i$ est un numéro d'indice de ressource.

11. Le système selon la revendication 10, dans lequel

la $u_a$ contient N colonnes, la $n^{\text{ième}}$ colonne est $V_a^n$ et $V_a^n$ est liée à i ; et

$$V_a^n = [1 \ e^{j2\pi X/32} \ e^{j4\pi X/32} \ e^{j6\pi X/32}]^T,$$

dans lequel, X est un entier et les valeurs du X sont différentes pour un n différent.

12. Le système selon la revendication 10 ou 11, dans lequel
le dispositif de station de base est en outre configuré pour : dans les ressources de transmission, précoder des données de couche M à envoyer en plus des données de couche N en utilisant $w_b = \begin{bmatrix} u_b \\ \beta \cdot u_b \end{bmatrix}$, dans lequel $u_b$ est un vecteur ou une matrice liée à l'emplacement de ressource de transmission i ; $\beta$ est un nombre réel ou un nombre complexe lié à l'emplacement de ressource de transmission i ; $\beta = -\alpha$ pour les mêmes emplacements de ressource de transmission; et N est un entier inférieur ou égal au nombre d'antennes de transmission de station de base.

13. Le système selon la revendication 12, dans lequel
la $u_b$ contient M colonnes, la $n^{\text{ième}}$ colonne est $V_b^n$, et $V_b^n$ est liée à i,
ou,
dans lequel,
lorsque les données de couche N et les données de couche M appartiennent à un même utilisateur, la $u_a$ et la $u_b$ sont les mêmes ou différentes ; quand une somme du M et du N est plus grande que 2 et que la $u_a$ et la $u_b$ sont différentes, les colonnes contenues dans la $u_a$ sont un sous-ensemble des colonnes contenues dans la $u_b$, ou les colonnes contenues dans la $u_b$ sont un sous-ensemble des colonnes contenues dans la $u_a$ ; et
lorsque les données de couche N et les données de couche M appartiennent à des utilisateurs différents, la $u_a$ et la $u_b$ sont orthogonales.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010145554 A1

**Non-patent literature cited in the description**

- Technical Specification Group Radio Access Network; Evolved Universal Terrestrial Radio Access (E-UTRA); Physical layer procedures (Release 8). *3rd Generation Partnership Project*

- Technical Specification Group Radio Access Network; Evolved Universal Terrestrial Radio Access (E-UTRA);Physical Channels and Modulation(Release 8). *3rd Generation Partnership Project*